# EUROPEAN PATENT APPLICATION

(11) **EP 4 589 867 A1**
(43) Date of publication of application: **23.07.2025**
(21) Application number: 23876236.3
(22) Date of filing: 29.06.2023
(51) Int. Cl.: H04J 3/06

(54) **COMMUNICATION METHOD AND COMMUNICATION APPARATUS**

(30) Priority: 14.10.2022 CN 202211262708
(71) Applicant: Huawei Technologies Co., Ltd., Shenzhen, Guangdong 518129 (CN)
(72) Inventor: LI, Yunbo, Shenzhen, Guangdong 518129 (CN); GUO, Yuchen, Shenzhen, Guangdong 518129 (CN); GAN, Ming, Shenzhen, Guangdong 518129 (CN); YANG, Mao, Xi'an, Shaanxi 710072 (CN)
(74) Representative: MERH-IP Matias Erny Reichl Hoffmann Patentanwälte PartG mbB
(86) International application number: PCT/CN2023/103737
(87) International publication number: WO 2024/078027

(57) **Abstract**

Embodiments of this application provide a communication method, which may be applied to a WLAN system that supports IEEE 802.11 series protocols such as 802.11be/Wi-Fi 7/EHT, Wi-Fi 8, or a next-generation protocol of Wi-Fi 8. The method includes: determining a first start time of a target wake time service period TWT SP based on a value of a target wake time TWT field and a TWT wake interval in a first beacon frame; and rounding the first start time to obtain a second start time. Therefore, a start time that is determined based on information about a TWT element and that is of a TWT SP included in a broadcast TWT ID is rounded, so that the start time of the TWT SP is in a unit of a time unit TU. This avoids misreading caused by nonalignment of start times of TWT SPs.

## Description

This application claims priority to Chinese Patent Application No. 202211262708.5, filed with the China National Intellectual Property Administration on October 14, 2022 and entitled "COMMUNICATION METHOD AND COMMUNICATION APPARATUS", which is incorporated herein by reference in its entirety.

### TECHNICAL FIELD

Embodiments of this application relate to the field of wireless communication technologies, and more specifically, to a communication method and a communication apparatus.

### BACKGROUND

From standards such as IEEE 802.11a/b/g/n/ac/ax to 802.11be that is currently being discussed in the industry, a standard version of a wireless local area network (Wireless Local Area Network, WLAN) is continuously evolved and developed. Currently, increasing wireless network applications and services such as online games, virtual reality, and industrial sites have strict requirements on latency characteristics. Therefore, in the 802.11be standard, a guaranteed latency and latency jitter characteristic is regarded as a key technical objective, and a target wake time (restricted target wakeup time, TWT) technology is proposed to improve latency assurance performance.

TWT parameter information is carried in a TWT element of a beacon frame. For a broadcast TWT, a start time that is of a TWT service period (TWT service period, TWT SP, or SP for short) included in a broadcast TWT ID may be determined based on information about a TWT element. An existing broadcast TWT easily causes a communication error.

### SUMMARY

Embodiments of this application provide a communication method. A start time that is determined based on information about a TWT element and that is of a TWT SP included in a broadcast TWT ID is rounded, so that the start time of the TWT SP is in a unit of a time unit (time unit, TU). This avoids misreading caused by nonalignment of start times of TWT SPs.

According to a first aspect, a communication method is provided. The method may be performed by an access point, or may be performed by a component (for example, a chip or a circuit) of the access point. This is not limited. For ease of description, an example in which the method is performed by the access point is used below for description.

The method may include: determining a first start time of a target wake time service period TWT SP based on a value of a target wake time TWT field and a TWT wake interval in a first beacon frame; and rounding the first start time to obtain a second start time.

Based on the foregoing solution, a start time that is determined based on information about a TWT element and that is of a TWT SP included in a broadcast TWT ID is rounded, so that the start time of the TWT SP is in a unit of a TU. This avoids misreading caused by nonalignment of start times of TWT SPs.

In a possible implementation, the rounding is rounding in the unit of the time unit TU.

In a possible implementation, the rounding the first start time to obtain a second start time includes: rounding up the first start time to obtain the second start time; rounding down the first start time to obtain the second start time; or rounding off the first start time to obtain the second start time. Based on the foregoing solution, rounding the first start time in a plurality of manners has similar effect. In an actual operation, only one of the manners may be selected, or different alignment manners may be selected for different scenarios, to increase flexibility of a first start time rounding solution.

In a possible implementation, the second start time is a value of a target wake time TWT field in a second beacon frame, and the second beacon frame is a beacon frame following the first beacon frame.

In a possible implementation, the method further includes: sending the first beacon frame and/or the second beacon frame.

In a possible implementation, a value of a broadcast target wake time identifier TWT ID field in the first beacon frame is the same as a value of a broadcast TWT ID field in the second beacon frame.

In a possible implementation, the first beacon frame and the second beacon frame are delivery traffic indication map DTIM beacon frames; or the first beacon frame is a DTIM beacon frame, and the second beacon frame is a regular beacon frame.

In a possible implementation, the first beacon frame is a first DTIM beacon frame.

In a possible implementation, the method further includes: determining a first quiet interval, where a start time of the first quiet interval is the second start time, and the first quiet interval is an overlapping quiet interval.

Based on the foregoing solution, the access point can determine the second start time that is an integer multiple of TU as the start time of the overlapping quiet interval, so that the start time of the overlapping quiet interval is aligned with the start time of the TWT SP.

In a possible implementation, the second beacon frame or the first beacon frame includes the first quiet interval, and the second beacon frame is the beacon frame following the first beacon frame.

In a possible implementation, the start time of the first quiet interval is based on a target beacon transmission time TBTT, the TBTT is N multiplied by time unit TU, and N is an integer.

In a possible implementation, the second start time is based on a TSF.

Based on the foregoing solution, the access point can set the start time of the first quiet interval to an integer multiple of TU, so that the start time of the first quiet interval is aligned with the start time of the TWT SP, and the first quiet interval becomes an overlapping quiet interval.

In a possible implementation, a start time of a second quiet interval is the second start time, and the second quiet interval is an overlapping quiet interval.

Based on the foregoing solution, the access point can determine the second start time that is an integer multiple of TU as the start time of the overlapping quiet interval, so that the start time of the overlapping quiet interval is aligned with the start time of the TWT SP.

In a possible implementation, a second beacon frame or the first beacon frame includes the second quiet interval, and the second beacon frame is a beacon frame following the first beacon frame.

In a possible implementation, the start time of the second quiet interval is based on a target beacon transmission time TBTT, the TBTT is N multiplied by time unit TU, and N is an integer.

Based on the foregoing solution, the access point can set the start time of the first quiet interval to an integer multiple of TU, so that the start time of the first quiet interval is aligned with the start time of the TWT SP, and the first quiet interval becomes an overlapping quiet interval.

In a possible implementation, the method further includes: determining a third quiet interval, where the second start time falls within the third quiet interval, and the third quiet interval is an overlapping quiet interval.

Based on the foregoing solution, when the start time of the TWT SP is not an integer multiple of TU, when setting the overlapping quiet interval, the access point determines a quiet interval in which the start time of the TWT SP is located as the overlapping quiet interval. Therefore, even when a TBTT is not an integer multiple of TU, the third quiet interval may be set to the overlapping quiet interval.

In a possible implementation, the method further includes: determining the TWT wake interval based on a TWT wake interval mantissa field and a TWT wake interval exponent field in the first beacon frame.

According to a second aspect, a communication method is provided. The method may be performed by a station, or may be performed by a component (for example, a chip or a circuit) of the station. This is not limited. For ease of description, an example in which the method is performed by the station is used below for description.

The method may include: The station determines a first start time of a target wake time service period TWT SP based on a value of a target wake time TWT field and a TWT wake interval in a beacon frame, where the second beacon frame is a beacon frame following the first beacon frame. The station rounds the first start time to obtain a second start time. The station determines, based on the second start time and a start time of a quiet interval, whether the quiet interval is an overlapping quiet interval.

Based on the foregoing solution, the station rounds a start time that is determined based on information about a TWT element and that is of a TWT SP included in a broadcast TWT ID, so that the start time of the TWT SP is an integer multiple of TU. Therefore, the station can determine, based on the start time of the TWT SP and the received start time of the quiet interval, whether the quiet interval is the overlapping quiet interval. This avoids misreading caused by nonalignment of the start time of the TWT SP and the received start time of the quiet interval.

In a possible implementation, the rounding is rounding in the unit of the time unit TU.

In a possible implementation, that the station rounds the first start time to obtain a second start time includes: The station rounds up the first start time to obtain the second start time; the station rounds down the first start time to obtain the second start time; or the station rounds off the first start time to obtain the second start time.

Based on the foregoing solution, rounding the first start time in a plurality of manners has similar effect. In an actual operation, only one of the manners may be selected, or different alignment manners may be selected for different scenarios, to increase flexibility of a first start time rounding solution.

In a possible implementation, that the station determines, based on the second start time and a start time of a quiet interval, whether the quiet interval is an overlapping quiet interval includes: When the second start time is the same as the start time of the quiet interval, the station determines that the quiet interval is the overlapping quiet interval.

In a possible implementation, the start time of the quiet interval is based on a target beacon transmission time TBTT, the TBTT is N multiplied by time unit TU, and N is an integer.

Based on the foregoing solution, an access point can set the start time of the quiet interval to the integer multiple of TU, so that the start time of the quiet interval is aligned with the start time of the TWT SP, and the quiet interval becomes an overlapping quiet interval.

In a possible implementation, the method further includes: The station receives the beacon frame.

In a possible implementation, the beacon frame is a delivery traffic indication map DTIM beacon frame or a regular beacon frame.

In a possible implementation, that the station determines, based on the second start time and a start time of a quiet interval, whether the quiet interval is an overlapping quiet interval includes: The station determines the quiet interval based on the start time of the quiet interval and duration of the quiet interval. When the second start time falls within the quiet interval, the station determines that the quiet interval is the overlapping quiet interval.

Based on the foregoing solution, when the start time of the TWT SP cannot be aligned with the start time of the quiet interval, the station can determine whether the quiet interval is the overlapping quiet interval by determining whether the start time of the TWT SP falls within a quiet interval.

In a possible implementation, the beacon frame includes an element corresponding to the quiet interval.

In a possible implementation, when the station is an extremely high throughput station, the method further includes: The station ignores the quiet interval.

According to a third aspect, a communication method is provided. The method may be performed by an access point, or may be performed by a component (for example, a chip or a circuit) of the access point. This is not limited. For ease of description, an example in which the method is performed by the access point is used below for description.

The method may include: determining a start time of a target wake time service period TWT SP based on a value of a target wake time TWT field and a TWT wake interval in a beacon frame; and determining a quiet interval, where the start time of the TWT SP falls within the quiet interval, and the quiet interval is an overlapping quiet interval.

In a possible implementation, the beacon frame includes an element corresponding to the quiet interval.

Based on the foregoing solution, when the start time of the TWT SP cannot be aligned with a start time of a first quiet interval, when setting an overlapping quiet interval, the access point may determine that a quiet interval overlaps the start time of the TWT SP as the overlapping quiet interval.

According to a fourth aspect, a communication method is provided. The method may be performed by a station, or may be performed by a component (for example, a chip or a circuit) of the station. This is not limited. For ease of description, an example in which the method is performed by the station is used below for description.

The method may include: The station determines a start time of a target wake time service period TWT SP based on a value of a target wake time TWT field and a TWT wake interval in a beacon frame. The station determines, based on the start time of the TWT SP and a start time of a quiet interval, whether the first quiet interval is an overlapping quiet interval.

Based on the foregoing solution, when the start time of the TWT SP is not an integer multiple of TU, the station can determine whether the quiet interval is the overlapping quiet interval by determining whether the start time of the TWT SP falls within a quiet interval.

In a possible implementation, the beacon frame includes an element corresponding to the quiet interval.

In a possible implementation, that the station determines, based on the start time of the TWT SP and a start time of a quiet interval, whether the quiet interval is an overlapping quiet interval includes: The station determines the quiet interval based on the start time of the quiet interval and duration of the quiet interval. When the start time of the TWT SP falls within the quiet interval, the station determines that the quiet interval is the overlapping quiet interval.

In a possible implementation, when the station is an extremely high throughput station, the method further includes: The station ignores the quiet interval.

According to a fifth aspect, a communication apparatus is provided, including units configured to perform the method shown in the first aspect. The communication apparatus may be an access point, or may be a chip or a circuit disposed in the access point. This is not limited in this application.

The communication apparatus includes:
a processing unit, configured to determine a first start time of a target wake time service period TWT SP based on a value of a target wake time TWT field and a TWT wake interval in a first beacon frame, where the processing unit is further configured to round the first start time to obtain a second start time.

In a possible implementation, the rounding is rounding in a unit of a time unit TU.

In a possible implementation, the processing unit is further configured to round up the first start time to obtain the second start time; the processing unit is further configured to round down the first start time to obtain the second start time; or the processing unit is further configured to round off the first start time to obtain the second start time.

In a possible implementation, the second start time is a value of a target wake time TWT field in a second beacon frame, and the second beacon frame is a beacon frame following the first beacon frame.

In a possible implementation, a transceiver unit is configured to send the first beacon frame and/or the second beacon frame.

In a possible implementation, a value of a broadcast target wake time identifier TWT ID field in the first beacon frame is the same as a value of a broadcast TWT ID field in the second beacon frame.

In a possible implementation, the first beacon frame and the second beacon frame are delivery traffic indication map DTIM beacon frames; or the first beacon frame is a DTIM beacon frame, and the second beacon frame is a regular beacon frame.

In a possible implementation, the first beacon frame is a first DTIM beacon frame.

In a possible implementation, the processing unit is further configured to determine a first quiet interval, where a start time of the first quiet interval is the second start time, and the first quiet interval is an overlapping quiet interval.

In a possible implementation, the second beacon frame or the first beacon frame includes the first quiet interval, and the second beacon frame is the beacon frame following the first beacon frame.

In a possible implementation, the start time of the first quiet interval is based on a target beacon transmission time TBTT, the TBTT is N multiplied by time unit TU, and N is an integer.

In a possible implementation, the second start time is based on a TSF.

In a possible implementation, a start time of a second quiet interval is the second start time, and the second quiet interval is an overlapping quiet interval.

In a possible implementation, a second beacon frame or the first beacon frame includes the second quiet interval, and the second beacon frame is a beacon frame following the first beacon frame.

In a possible implementation, the start time of the second quiet interval is based on a target beacon transmission time TBTT, the TBTT is N multiplied by time unit TU, and N is an integer.

In a possible implementation, the processing unit is further configured to determine a third quiet interval, where the second start time falls within the third quiet interval, and the third quiet interval is an overlapping quiet interval.

In a possible implementation, the processing unit is further configured to determine the TWT wake interval based on a TWT wake interval mantissa field and a TWT wake interval exponent field in the first beacon frame.

For explanations of related content and beneficial effect of the communication apparatus provided in the fifth aspect, refer to the method shown in the first aspect. Details are not described herein again.

According to a sixth aspect, a communication apparatus is provided, including units configured to perform the method shown in the second aspect. The communication apparatus may be a station, or may be a chip or a circuit disposed in the station. This is not limited in this application.

The communication apparatus includes:
a processing unit, configured to determine a first start time of a target wake time service period TWT SP based on a value of a target wake time TWT field and a TWT wake interval in a beacon frame, where the processing unit is further configured to round the first start time to obtain a second start time; and the processing unit is further configured to determine, based on the second start time and a start time of a quiet interval, whether the quiet interval is an overlapping quiet interval.

In a possible implementation, the rounding is rounding in a unit of a time unit TU.

In a possible implementation, the processing unit is further configured to round up the first start time to obtain the second start time; the processing unit is further configured to round down the first start time to obtain the second start time; or the processing unit is further configured to round off the first start time to obtain the second start time.

In a possible implementation, when the second start time is the same as the start time of the quiet interval, the processing unit is further configured to determine that the quiet interval is the overlapping quiet interval.

In a possible implementation, the start time of the quiet interval is based on a target beacon transmission time TBTT, the TBTT is N multiplied by time unit TU, and N is an integer.

In a possible implementation, a transceiver unit is configured to receive the beacon frame.

In a possible implementation, the beacon frame is a delivery traffic indication map DTIM beacon frame or a regular beacon frame.

In a possible implementation, the processing unit is further configured to determine the quiet interval based on the start time of the quiet interval and duration of the quiet interval. When the second start time falls within the quiet interval, the processing unit is further configured to determine that the quiet interval is the overlapping quiet interval.

In a possible implementation, the beacon frame includes an element corresponding to the quiet interval.

In a possible implementation, when the station is an extremely high throughput station, the processing unit is further configured to ignore the quiet interval.

For explanations of related content and beneficial effect of the communication apparatus provided in the sixth aspect, refer to the method shown in the second aspect. Details are not described herein again.

According to a seventh aspect, a communication apparatus is provided, including units configured to perform the method shown in the third aspect. The communication apparatus may be an access point, or may be a chip or a circuit disposed in the access point. This is not limited in this application.

The communication apparatus includes:
a processing unit, configured to determine a start time of a target wake time service period TWT SP based on a value of a target wake time TWT field and a TWT wake interval in a beacon frame, where the processing unit is further configured to determine a quiet interval, where the start time of the TWT SP falls within the quiet interval, and the quiet interval is an overlapping quiet interval.

In a possible implementation, the beacon frame includes an element corresponding to the quiet interval.

For explanations of related content and beneficial effect of the communication apparatus provided in the seventh aspect, refer to the method shown in the third aspect. Details are not described herein again.

According to an eighth aspect, a communication apparatus is provided, including units configured to perform the method shown in the fourth aspect. The communication apparatus may be a station, or may be a chip or a circuit disposed in the station. This is not limited in this application.

The communication apparatus includes:
a processing unit, configured to determine a start time of a target wake time service period TWT SP based on a value of a target wake time TWT field and a TWT wake interval in a first beacon frame, where the processing unit is further configured to determine, based on the start time of the TWT SP and a start time of a quiet interval, whether the quiet interval is an overlapping quiet interval.

In a possible implementation, the beacon frame includes an element corresponding to the quiet interval.

In a possible implementation, the processing unit is further configured to determine the quiet interval based on the start time of the quiet interval and duration of the quiet interval. When the start time of the TWT SP falls within the quiet interval, the processing unit is further configured to determine that the quiet interval is the overlapping quiet interval.

In a possible implementation, when the station is an extremely high throughput station, the processing unit is further configured to ignore the quiet interval.

For explanations of related content and beneficial effect of the communication apparatus provided in the eighth aspect, refer to the method shown in the fourth aspect. Details are not described herein again.

According to a ninth aspect, a communication apparatus is provided. The apparatus includes: a memory, configured to store programs; and at least one processor, configured to execute the computer program or instructions stored in the memory, to perform the method in any possible implementation of the first aspect to the fourth aspect.

In an implementation, the apparatus is an access point.

In another implementation, the apparatus is a chip, a chip system, or a circuit used in the access point.

According to a tenth aspect, this application provides a processor, configured to perform the methods provided in the foregoing aspects.

Operations such as sending and obtaining/receiving performed by the processor may be understood as operations such as outputting and receiving or inputting performed by the processor unless otherwise specified or if the operations does not conflict with an actual function or internal logic of the operations in a related description, or may be understood as sending and receiving operations performed by a radio frequency circuit and an antenna. This is not limited in this application.

According to an eleventh aspect, a computer-readable storage medium is provided. The computer-readable storage medium stores program code executed by a device, and the program code is used to perform the method in any possible implementation of the first aspect to the fourth aspect.

According to a twelfth aspect, a computer program product including instructions is provided. When the computer program product runs on a computer, the computer is enabled to perform the method in any possible implementation of the first aspect to the fourth aspect.

According to a thirteenth aspect, a chip is provided. The chip includes a processor and a communication interface, and the processor reads, through the communication interface, instructions stored in a memory, to perform the method in any possible implementation of the first aspect to the fourth aspect.

Optionally, in an implementation, the chip further includes the memory, the memory stores computer programs or the instructions, and the processor is configured to execute the computer program or the instructions stored in the memory. When the computer program or the instructions are executed, the processor is configured to perform the method in any possible implementation of the first aspect to the fourth aspect.

According to a fourteenth aspect, a communication system is provided, including one or both of the foregoing access point and the foregoing station.

### BRIEF DESCRIPTION OF DRAWINGS

FIG. 1 is a schematic diagram of an R-TWT mechanism;
FIG. 2 is a schematic diagram of a frame structure of a TWT element;
FIG. 3 is a schematic diagram of a service arrival interval using a service rate of 75 frames per second as an example;
FIG. 4 is a schematic diagram of a communication system applicable to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a schematic block diagram of a communication apparatus according to this application;
FIG. 10 is a schematic diagram of a structure of a communication apparatus according to this application; and
FIG. 11 is a schematic flowchart of a communication method 1100 according to an embodiment of this application.

### DESCRIPTION OF EMBODIMENTS

The following describes technical solutions in embodiments of this application with reference to accompanying drawings.

To facilitate understanding of the technical solutions in this application, technologies related to this application are first briefly described.

In 802.11be, a non-access point (non-access point, non-AP) extremely high throughput station (extremely high throughput station, EHT STA) has many real-time applications (real-time applications, RTAs), and traffic of these applications has a very strict latency requirement. Based on this, a target wake time (restricted target wakeup time, TWT) mechanism is proposed. The restricted target wake time (restricted target wakeup time, R-TWT) mechanism is a new mechanism for ensuring a low-latency service derived from an existing broadcast TWT (broadcast TWT) in 802.11ax.

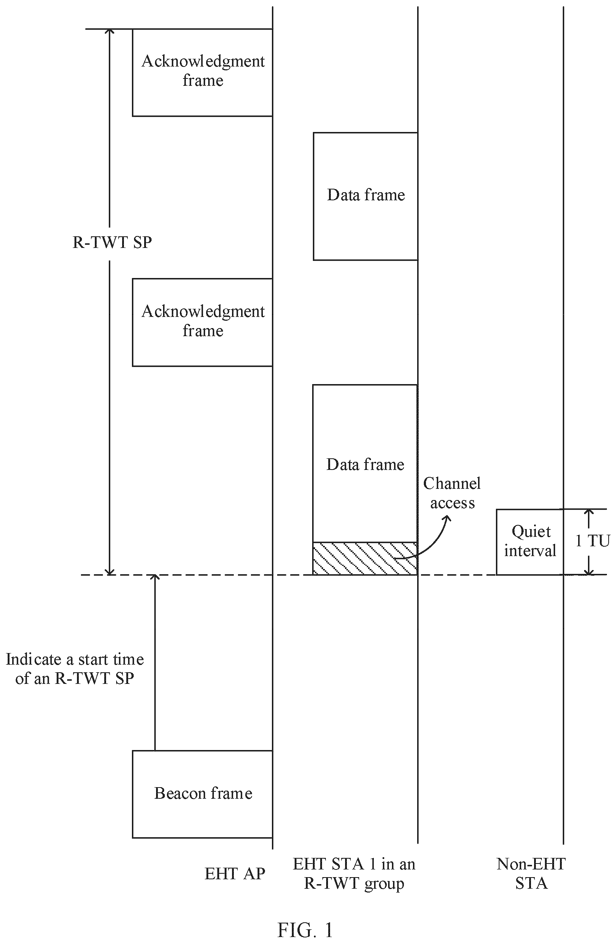

FIG. 1 is a schematic diagram of the R-TWT mechanism. As shown in FIG. 1, in the R-TWT mechanism, an access point (access point, AP) broadcasts one or more R-TWT service periods (service periods, SPs) by using a beacon frame or a probe response frame. After an EHT STA in a basic service set (basic service set, BSS) receives information about any R-TWT SP broadcast by the AP, if dot11RestrictedTWTOptionImplemented of the EHT STA is set to true, the EHT STA ends a transmission opportunity (transmission opportunity, TXOP) of the EHT STA before a start time of the R-TWT SP. In addition, when the AP may set, in the beacon (beacon) frame or the probe response frame, an overlapping quiet interval corresponding to the start time of the R-TWT SP, and when duration is 1 time unit (time unit, TU), the EHT STA may ignore the foregoing overlapping quiet interval to contend for a channel after the start of the R-TWT SP. However, a legacy station (legacy station, legacy STA) needs to keep quiet based on the overlapping quiet interval. In this way, a quantity of stations (stations, STAs) contending for the channel in the BSS is reduced, and a probability of obtaining the channel by the EHT STAhaving a low-latency service is increased.

R-TWT parameter information is indicated in a TWT element.

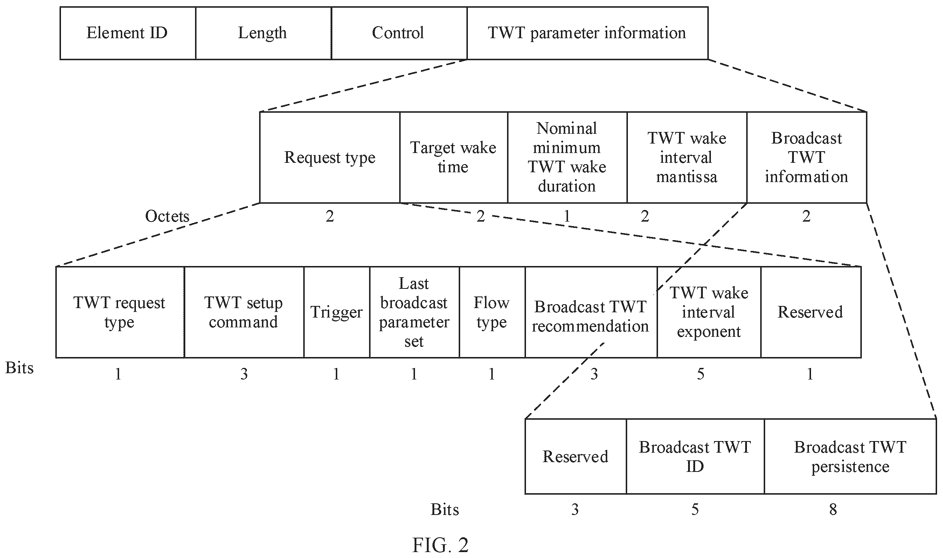

FIG. 2 is a schematic diagram of a frame structure of a broadcast TWT element. As shown in FIG. 2, the broadcast TWT element includes an element ID field, a length field, a control field, and a TWT parameter information field.

The TWT parameter information field includes a request type (request type) field, a target wake time (target wakeup time, TWT) field, a minimum TWT wake duration (nominal minimum TWT wakeup duration) field, a TWT wake interval mantissa (TWT wakeup interval mantissa) field, and a broadcast TWT information (broadcast TWT info) field.

The TWT field indicates a start time of a first TWT SP after a frame carrying the broadcast TWT element. A length of the TWT field is 2 octets, and a least significant bit corresponds to bit 10 of a time synchronization function (timing synchronization function, TSF).

It should be understood that the TSF indicates current time of a station, and provides time information for a plurality of mechanisms and procedures that require time synchronization. A timestamp field indicating the TSF is 64 bits (bit 0 to bit 63), where the bit 63 is a most significant bit, and the bit 0 is a least significant bit. The least significant bit corresponds to 1 microsecond, and therefore the bit 10 corresponds to 2^10 microseconds. Therefore, it may be considered that a unit (namely, a granularity) of the TSF is 1 microsecond (µs), and a unit (granularity) of the TWT field is 2^10 µs = 1024 µs. Currently, 1024 µs is defined as 1 time unit (time unit, TU) in a standard, and the TWT field is set in a unit of 1 TU.

It should be noted that, in daily communication, a time unit (for example, a data arrival interval of a service) is mostly described by using milliseconds, and 1 TU = 1.024 ms, and the two are approximately equal. For ease of description by using an example, in this application, the TWT field is described in a unit of 1 ms, that is, in this application, 1 ms may be equal to 1 TU. However, it should be understood that when the unit of 1 TU is used, an alignment and adjustment method based on the unit of 1 TU is the same as an alignment and adjustment method based on the unit of 1 ms.

A unit (namely, a granularity) of the TWT wake interval mantissa field is 1 µs.

The request type field includes a TWT wake interval exponent (TWT wake interval exponent) field, and a minimum value of the TWT wake interval exponent field is 0.

The TWT wake interval mantissa field and the TWT wake interval exponent field are used to determine a TWT wake interval (TWT wake interval), and the TWT wake interval indicates an interval between start times of two consecutive TWT SPs. The TWT wake interval is a value of the TWT wake interval mantissa field x 2^(a value of the TWT wake interval exponent field), and a unit (namely, a granularity) of the TWT wake interval is 1 µs.

The broadcast TWT information field includes a broadcast TWT identity (broadcast TWT ID), and the broadcast TWT identity indicates an ID of the broadcast TWT element. It should be understood that, for a same group of broadcast TWT elements, broadcast TWT IDs of the same group of broadcast TWT elements are the same.

It should be understood that the descriptions of the frame structure of the broadcast TWT element herein are also applicable to the following embodiments, and are not described again.

It can be learned from FIG. 2 that, based on a current frame structure setting of the broadcast TWT element, when the TWT wake interval is determined based on the TWT wake interval mantissa field and the TWT wake interval exponent field, the unit of the TWT wake interval is 1 µs while the unit of the TWT field is 1 ms. In this way, a start time that is determined based on the TWT field and the TWT wake interval and that is of a TWT SP is not an integer multiple of 1 ms, in other words, the start time of the TWT SP cannot be aligned with 1 ms (or 1 TU).

The following provides specific description with reference to an example.

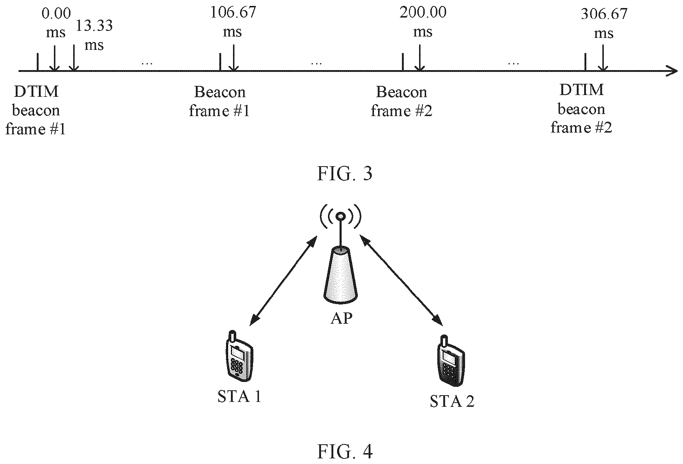

FIG. 3 is a schematic diagram of a service arrival interval using a service rate of 75 frames per second as an example.

For ease of description, in this application, the service rate of 75 frames per second is used as an example for description. However, it should be understood that the solutions in this application are not limited to the specific frame rate.

In FIG. 3, a beacon frame interval is 100 ms, and a delivery traffic indication map (delivery traffic indication map, DTIM) beacon frame interval is three times the beacon frame interval, that is, 300 ms. The service arrival interval is 1/75 s, that is, 13.333 ms. A service arrival time may also be understood as a start time of a TWT SP. For example, a start time of a first TWT SP of a DTIM beacon frame #1 is 0.00 ms, a start time of a second TWT SP of the DTIM beacon frame #1 is 13.333 ms, a start time of a first TWT SP of a beacon frame #1 is 106.67 ms, a start time of a first TWT SP of a beacon frame #2 is 200.00 ms, and a start time of a first TWT SP of a DTIM beacon frame #2 is 306.67 ms. It can be learned from FIG. 3 that a start time of a TWT SP after a first non-DTIM beacon frame (beacon frame #1) is 106.67 ms, which is not an integer multiple of 1 ms.

It should be understood that after a unit in FIG. 3 is changed to 1 TU, the beacon frame interval is 100 TUs, the DTIM beacon frame interval is three times the beacon frame interval, that is, 300 TUs, the service arrival interval is 13.333 TUs, the start time of the first TWT SP of the DTIM beacon frame #1 is 0.00 TU, the start time of the second TWT SP of the DTIM beacon frame #1 is 13.333 TUs, the start time of the first TWT SP of the beacon frame #1 is 106.67 TUs, the start time of the first TWT SP of the beacon frame #2 is 200.00 TUs, and the start time of the first TWT SP of the DTIM beacon frame #2 is 306.67 TUs.

Based on this, this embodiment of this application provides a communication method. A start time that is determined based on a TWT element and that is of a TWT SP is rounded, so that the start time of the TWT SP and a start time of a quiet interval are in a unit of a time unit TU, and can match each other. This avoids misreading caused by nonalignment of the start time of the TWT SP and the start time of the quiet interval.

The technical solutions provided in this application are applicable to a WLAN scenario. For example, the technical solutions provided in this application are applicable to the IEEE 802.11 series standards, for example, a wireless local area network system that supports a next-generation Wi-Fi protocol of IEEE 802.11 ax, such as 802.11be, 802.15.4z, 802.15.4ab, Wi-Fi 7, or EHT, or a wireless local area network system that supports the 802.11 series protocols such as a next-generation protocol of 802.11be or Wi-Fi 8. The technical solutions provided in this application may be further applied to an ultra-wideband (UWB)-based wireless personal area network system and a sensing (sensing) system.

Although embodiments of this application are mainly described by using an example in which a WLAN is deployed, especially a network to which the IEEE 802.11 series standards are applied, a person skilled in the art can easily understand that aspects in this application may be extended to another network using various standards or protocols, for example, a high performance radio local area network (high performance radio local area network, HIPERLAN), a wide area network (wide area network, WAN), a personal area network (personal area network, PAN), or other networks now known or later developed. The HIPERLAN is a wireless standard similar to the IEEE 802.11 standard and is mainly used in Europe. Therefore, regardless of a used coverage area and wireless access protocol, the aspects provided in this application are applicable to any suitable wireless network.

Embodiments of this application are further applicable to a wireless local area network system, for example, the internet of things (internet of things, IoT) network or the vehicle-to-everything (vehicle to X, V2X). Certainly, embodiments of this application are further applicable to other possible communication systems such as a long term evolution (long term evolution, LTE) system, an LTE frequency division duplex (frequency division duplex, FDD) system, an LTE time division duplex (time division duplex, TDD) system, a fifth generation (5th generation, 5G) communication system and a future sixth generation (6th generation, 6G) communication system.

The foregoing communication systems applicable to this application are merely examples for description, and communication systems applicable to this application are not limited thereto. This is stated herein once for all, and is not repeated below.

FIG. 4 is a schematic diagram of a communication system applicable to an embodiment of this application. As shown in FIG. 4, the communication method provided in this application is applicable to data communication between one AP and one or more STAs (for example, data communication between an AP 1 and a STA 1, and between the AP 1 and a STA 2). Optionally, the STA herein includes at least a legacy STA, for example, the STA 1. In addition, the STA herein may further include an EHT STA, for example, the STA 2.

The access point may be an access point used by a terminal device (for example, a mobile phone) to access a wired (or wireless) network, and is mainly deployed at home, in a building, and in a campus. A typical coverage radius is tens of meters or more than 100 meters. Certainly, the access point may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal device (for example, a mobile phone) or a network device (for example, a router) with a Wi-Fi chip. The access point may be a device that supports the 802.11be standard. Alternatively, the access point may be a device that supports a plurality of wireless local area network (wireless local area network, WLAN) standards of the 802.11 family, such as 802.11be and a next-generation standard of 802.11be. The access point in this application may be a high efficiency (high efficient, HE) AP, an extremely high throughput (extremely high throughput, EHT) AP, or an access point applicable to a future generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television, a smart wearable device, a vehicle-mounted communication device, or a computer that supports a Wi-Fi communication function. Optionally, the station may support the 802.11be standard. The station may alternatively support the plurality of wireless local area network (wireless local area network, WLAN) standards of the 802.11 family, such as 802.11be and the next-generation standard of 802.11be.

The following describes the technical solutions of this application.

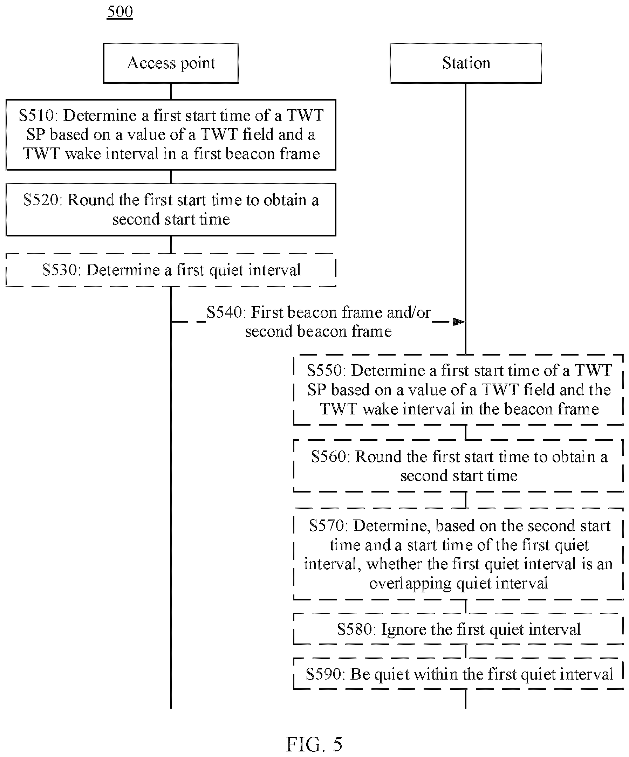

It should be noted that the methods shown in FIG. 5 to FIG. 7 are applicable to an R-TWT mechanism. For ease of description, the R-TWT is briefly referred to as a TWT below.

FIG. 5 is a schematic diagram of a communication method 500 according to an embodiment of this application. The method 500 may include the following steps.

S510: Determine a first start time of a target wake time service period TWT SP based on a value of a target wake time TWT field and a TWT wake interval in a first beacon frame.

Specifically, an access point (access point, AP) or a chip module in the AP determines the first start time of the TWT SP based on the value of the TWT field and the TWT wake interval in the first beacon frame.

The first start time is an actual start time of a first TWT SP after a second beacon frame. The second beacon frame is a beacon frame following the first beacon frame.

In embodiments of this application, an example in which the value of the target wake time TWT field is carried in the first beacon frame or the second beacon frame is used for description. The value of the target wake time TWT field may alternatively be carried in another management frame. This is not limited herein.

The TWT field indicates a start time of a first TWT SP after the first beacon frame.

The TWT wake interval is determined based on a TWT wake interval mantissa field in the first beacon frame and a TWT wake interval exponent field in the first beacon frame.

Specifically, the TWT wake interval is a value of the TWT wake interval mantissa field x 2^(a value of the TWT wake interval exponent field).

It should be noted that, in this application, the TWT field in the first beacon frame, the TWT wake interval mantissa field in the first beacon frame, the TWT wake interval exponent field, and the like in the first beacon frame may be understood as a TWT field, a TWT wake interval mantissa field, a TWT wake interval exponent field, and the like in a TWT element carried in the first beacon frame. The TWT field, the TWT wake interval mantissa field, the TWT wake interval exponent field, and the like in the TWT element carried in the first beacon frame are briefly referred to as the TWT field in the first beacon frame, the TWT wake interval mantissa field in the first beacon frame, the TWT wake interval exponent field, and the like in the first beacon frame below. This is not limited in this application.

S520: Round the first start time to obtain a second start time.

Specifically, after determining the first start time, the AP rounds the first start time to obtain the second start time.

The second start time is based on a TSF.

It should be understood that the second start time is an integer multiple of TU. For example, the second start time is 1 TU. For another example, the second start time is 10 TUs. This is not limited in this application.

The second start time is a value of a TWT field in the second beacon frame, and the second beacon frame is a beacon frame following the first beacon frame.

It should be understood that, that the second beacon frame is a beacon frame following the first beacon frame may be understood as follows: The second beacon frame is any beacon frame following the first beacon frame. This is not limited in this application.

It should be understood that, that the second start time is a value of a TWT field in the second beacon frame may be understood as follows: After obtaining the second start time, the AP sets the value of the TWT field in the second beacon frame to the second start time.

Rounding is rounding in a unit of the time unit TU. 1 TU is equal to 1024 µs.

In a possible implementation, the AP rounds up the first start time to obtain the second start time.

For example, when the first start time is 10.3 ms, the second start time obtained by the AP by rounding up the first start time is 11 ms.

In a possible implementation, the first start time is rounded down to obtain the second start time.

For example, when the first start time is 10.3 ms, the second start time obtained by the AP by rounding down the first start time is 10 ms.

In a possible implementation, the first start time is rounded off to obtain the second start time.

For example, when the first start time is 10.3 ms, the second start time obtained by the AP by rounding up the first start time is 10 ms.

For example, when the first start time is 10.7 ms, the second start time obtained by the AP by rounding up the first start time is 11 ms.

For example, when the first start time is 10.5 ms, the second start time obtained by the AP by rounding up the first start time according to a common practice of rounding off is 11 ms. However, it should be understood herein that it is alternatively feasible to uniformly select rounding down when 0.5 ms occurs, to be specific, 10 ms is obtained by rounding 10.5 ms.

It should be understood that the foregoing manner of rounding the first start time to obtain the second start time is merely an example. This is not limited in this application.

Based on the foregoing solution, a start time that is determined based on information about a TWT element and that is of a TWT SP included in a broadcast TWT ID is rounded, so that the start time of the TWT SP is in a unit of a TU. This avoids misreading caused by nonalignment of start times of TWT SPs. In a possible implementation, the method 500 further includes: S530: Determine a first quiet interval.

Specifically, the AP determines the first quiet interval for the TWT SP, and the first quiet interval is an overlapping quiet interval (overlapping quiet interval).

It should be understood that the overlapping quiet interval is a quiet interval whose start time is the same as the start time of the TWT SP.

It should be noted that the AP may configure one overlapping quiet interval for each TWT SP corresponding to the broadcast TWT ID, or may configure one overlapping quiet interval for each of one or more TWT SPs. A quantity of overlapping quiet intervals determined by the AP is not limited in this application. For ease of description, an example in which the AP determines an overlapping quiet interval for one TWT SP is used below for description. For a manner in which the AP determines an overlapping quiet interval for another TWT SP, refer to the following description.

A start time of the first quiet interval is based on a target beacon transmission time (target beacon transmission time, TBTT).

In a possible implementation, when the AP sets the start time of the first quiet interval to be an integer multiple of TU, the AP determines that the start time of the first quiet interval is the second start time.

It should be understood that when the start time of the first quiet interval is the integer multiple of TU, or when both the second start time and the start time of the first quiet interval are an integer multiple of TU, it may be considered that the TSF is aligned with the TBTT.

In a possible implementation, when the AP sets the start time of the first quiet interval not to be an integer multiple of TU, the AP determines the first quiet interval, where the second start time falls within the first quiet interval, and duration of the first quiet interval is 1 TU. In other words, the AP determines a quiet interval whose duration is 1 TU and that includes the second start time as the first quiet interval.

It should be understood that when the start time of the first quiet interval is not the integer multiple of TU, it may be considered that the TSF is not aligned with the TBTT.

The first beacon frame or the second beacon frame includes the first quiet interval.

It should be noted that, that the first beacon frame or the second beacon frame includes the first quiet interval may be understood as follows: A first quiet element (quiet element) carried in the first beacon frame includes the start time of the first quiet interval, or a first quiet element carried in the second beacon frame includes the start time of the first quiet interval. Specifically, a quiet offset (quiet offset) field of the first quiet element and a quiet count (quiet count) field of the first quiet element are used to determine the start time of the first quiet interval. A value of a quiet duration (quiet duration) field of the first quiet element indicates the duration of the first quiet interval, and the value of the quiet duration field of the first quiet element is the second start time.

In a possible implementation, the method 500 further includes: S540: Send the first beacon frame and/or the second beacon frame.

Specifically, the AP sends the first beacon frame and/or the second beacon frame to a station.

Correspondingly, the station receives the first beacon frame and/or the second beacon frame from the AP.

It should be understood that the AP may send the first beacon frame and the second beacon frame to the station, or the AP may send only the first beacon frame to the station, or the AP may send only the second beacon frame to the station. This is not limited in this application.

The station may be an extremely high throughput station (for example, an EHT STA). This is not limited in this application.

A value of a broadcast TWT ID field in the first beacon frame is the same as a value of a broadcast TWT ID field in the second beacon frame.

It should be understood that, that a value of a broadcast TWT ID field in the first beacon frame is the same as a value of a broadcast TWT ID field in the second beacon frame may be understood as follows: The first beacon frame and the second beacon frame indicate a same broadcast TWT.

In a possible implementation, the second beacon frame may be a delivery traffic indication map DTIM beacon frame, or the second beacon frame may be a non-DTIM beacon frame.

It should be noted that, in this implementation, because a DTIM beacon frame and a non-DTIM beacon frame do not need to be distinguished, the method is simple. However, for the non-DTIM beacon frame, an error less than 1 TU occurs in determining the start time of the TWT SP by a station that receives the non-DTIM beacon frame and a station that does not receive the non-DTIM beacon frame.

In a possible implementation, the second beacon frame is only a delivery traffic indication map DTIM beacon frame, and cannot be a non-DTIM beacon frame.

It should be noted that, in this implementation, for a non-DTIM beacon frame, no error occurs in determining the start time of the TWT SP by a station that receives the non-DTIM beacon frame and a station that does not receive the non-DTIM beacon frame. The non-DTIM beacon frame no longer carries the TWT element corresponding to the broadcast TWT ID, so that both the station that receives the non-DTIM beacon frame and the station that does not receive the non-DTIM beacon frame are based on a TWT parameter in a previous DTIM beacon frame to calculate the start time of the TWT SP. Therefore, no error occurs in determining the start time of the TWT SP by the stations.

In a possible implementation, the first beacon frame may be a delivery traffic indication map DTIM beacon frame.

In a possible implementation, the second beacon frame may be a DTIM beacon frame, or the second beacon frame may be a non-DTIM beacon frame, for example, a regular beacon frame. This is not limited in this application.

It should be noted that a sequence of sending the first beacon frame and the second beacon frame is not limited in this application. For example, the AP may send the first beacon frame and the second beacon frame after determining the second start time, or the AP may send the first beacon frame, then determine the second start time, and send the second beacon frame after determining the second start time.

It should be noted that a sequence of determining the first quiet interval and sending the first beacon frame and the second beacon frame is not limited in this application. For example, the AP may first determine the first quiet interval, and send the first beacon frame and the second beacon frame after determining the first quiet interval, where indication information of the first quiet interval is carried in the first beacon frame or the second beacon frame. Alternatively, the AP may send the first beacon frame first, then determine the first quiet interval, and send the second beacon frame after determining the first quiet interval, where the first quiet interval is carried in the second beacon frame.

In a possible implementation, the method 500 further includes: S550: The station determines a first start time of a TWT SP based on the value of the TWT field and the TWT wake interval in the beacon frame.

Specifically, after receiving the beacon frame, the station determines the first start time of the TWT SP based on the value of the TWT field and the TWT wake interval in the beacon frame.

It should be understood that the beacon frame may be the first beacon frame or the second beacon frame in S540.

It should be understood that, when the station receives the first beacon frame and the second beacon frame in S540, the station determines the first start time of the TWT SP between the first beacon frame and the second beacon frame based on the value of the TWT field and the TWT wake interval in the first beacon frame, and the station determines a first start time of a TWT SP after the second beacon frame based on the value of the TWT field and the TWT wake interval in the second beacon frame. Alternatively, when the station receives only the first beacon frame in S540, the station determines a first start time of a TWT SP after the first beacon frame based on the value of the TWT field and the TWT wake interval in the first beacon frame. Alternatively, when the station receives only the second beacon frame in S540, the station determines a first start time of a TWT SP after the second beacon frame based on the value of the TWT field and the TWT wake interval in the second beacon frame.

In a possible implementation, the method 500 further includes: S560: The station rounds the first start time to obtain a second start time.

Specifically, after determining the first start time, the station rounds the first start time to obtain the second start time.

Rounding is rounding in the unit of the time unit TU.

In a possible implementation, the station rounds up the first start time to obtain the second start time.

In a possible implementation, the station rounds down the first start time to obtain the second start time.

In a possible implementation, the station rounds off the first start time to obtain the second start time.

It should be understood that, for the foregoing description of rounding the first start time to obtain the second start time, refer to the description in S520. To avoid repetition, detailed descriptions thereof are omitted herein.

It should be understood that the foregoing manner of rounding the first start time to obtain the second start time is merely an example. This is not limited in this application.

In a possible implementation, the method 500 further includes: S570: The station determines, based on the second start time and the start time of the first quiet interval, whether the first quiet interval is an overlapping quiet interval.

Specifically, depending on whether the start time of the first quiet interval is the integer multiple of TU, the station determines, based on the second start time and the start time of the first quiet interval, whether the first quiet interval is the overlapping quiet interval in the following manners:
Manner 1: When the start time of the first quiet interval is the integer multiple of TU, the station determines, depending on whether the second start time is the same as the start time of the first quiet interval, whether the first quiet interval is the overlapping quiet interval .

That the start time of the first quiet interval is the integer multiple of TU may be understood as follows: The TBTT is N x TU, and N is an integer. For example, the start time of the first quiet interval is 1 TU. For another example, the start time of the first quiet interval is 10 TUs. This is not limited in this application.

It should be understood that when the start time of the first quiet interval is the integer multiple of TU, or when both the second start time and the start time of the first quiet interval are integer multiples of TU, it may be considered that the TSF is aligned with the TBTT.

In a possible implementation, when the second start time is the same as the start time of the first quiet interval, the station determines that the first quiet interval is the overlapping quiet interval.

In a possible implementation, when the second start time is different from the start time of the first quiet interval, the station determines that the first quiet interval is not the overlapping quiet interval.

Manner 2: When the start time of the first quiet interval is not the integer multiple of TU, the station determines, depending on whether the second start time falls within the first quiet interval, whether the first quiet interval is the overlapping quiet interval.

It should be understood that when the start time of the first quiet interval is not the integer multiple of TU, it may be considered that the TSF is not aligned with the TBTT.

In a possible implementation, when the second start time falls within the first quiet interval, the station determines that the first quiet interval is the overlapping quiet interval.

In a possible implementation, when the second start time does not fall within the first quiet interval, the station determines that the first quiet interval is not the overlapping quiet interval.

In a possible implementation, the method 500 further includes S580: The station ignores the first quiet interval.

Specifically, when the station is the extremely high throughput station (for example, the EHT STA), the station ignores the first quiet interval, in other words, the station is not quiet within the first quiet interval when the station determines that the first quiet interval is the overlapping quiet interval.

In a possible implementation, the method 500 further includes S590: The station is quiet within the first quiet interval.

Specifically, when the station is the extremely high throughput station (for example, the EHT STA), the station is quiet within the first quiet interval when the station determines that the first quiet interval is not the overlapping quiet interval.

It should be understood that, that the station is quiet within the first quiet interval may be understood as being quiet within a quiet interval in the conventional technology. For details, refer to the descriptions of quietness in the conventional technology. Detailed descriptions thereof are omitted herein.

Based on the foregoing solution, the start time that is determined based on the information about the TWT element and that is of the TWT SP included in the broadcast TWT ID is rounded, so that the start time of the TWT SP is an integer multiple of TU. In addition, when configuring an overlapping quiet interval, the AP can set, to a start time of the overlapping quiet interval, a start time of the TWT SP obtained by rounding the start time that is determined based on the information about the TWT element and that is of the TWT SP included in the broadcast TWT ID, so that the start time of the TWT SP and the start time of the quiet interval are in the unit of the time unit TU, and can match each other. This avoids misreading caused by nonalignment of the start time of the TWT SP and the start time of the quiet interval.

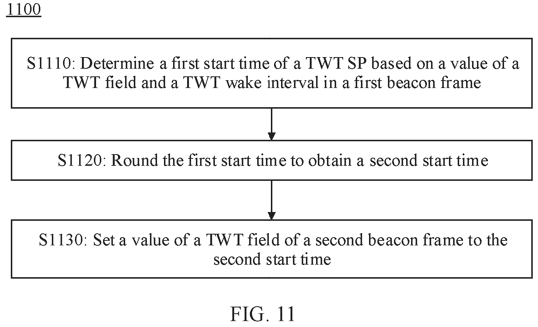

FIG. 11 is a schematic diagram of a communication method 1100 according to an embodiment of this application. The method 1100 may include the following steps.

S1110: Determine a first start time of a target wake time service period TWT SP based on a value of a target wake time TWT field and a TWT wake interval in a first beacon frame.

Specifically, an access point (access point, AP) or a chip module in the AP determines the first start time of the TWT SP based on the value of the TWT field and the TWT wake interval in the first beacon frame.

It should be noted that the process of S1110 is similar to the process of S510. To avoid repetition, detailed descriptions thereof are omitted herein.

S1120: Round the first start time to obtain a second start time.

Specifically, after determining the first start time, the AP rounds the first start time to obtain the second start time.

It should be noted that the process of S1120 is similar to the process of S520. To avoid repetition, detailed descriptions thereof are omitted herein.

S1130: Set a value of a TWT field of a second beacon frame to the second start time.

Specifically, after obtaining the second start time, the AP sets the value of the TWT field in the second beacon frame to the second start time.

The second beacon frame is a beacon frame following the first beacon frame.

It should be understood that, that the second beacon frame is a beacon frame following the first beacon frame may be understood as follows: The second beacon frame is any beacon frame following the first beacon frame. This is not limited in this application.

Based on the foregoing solution, a start time that is determined based on information about a TWT element and that is of a TWT SP included in a broadcast TWT ID is rounded, so that the start time of the TWT SP is in a unit of a TU. This avoids misreading caused by nonalignment of start times of TWT SPs.

It should be noted that the method provided in FIG. 11 is applicable to all broadcast TWT mechanisms, including but not limited to the R-TWT mechanism. This is not limited in this application.

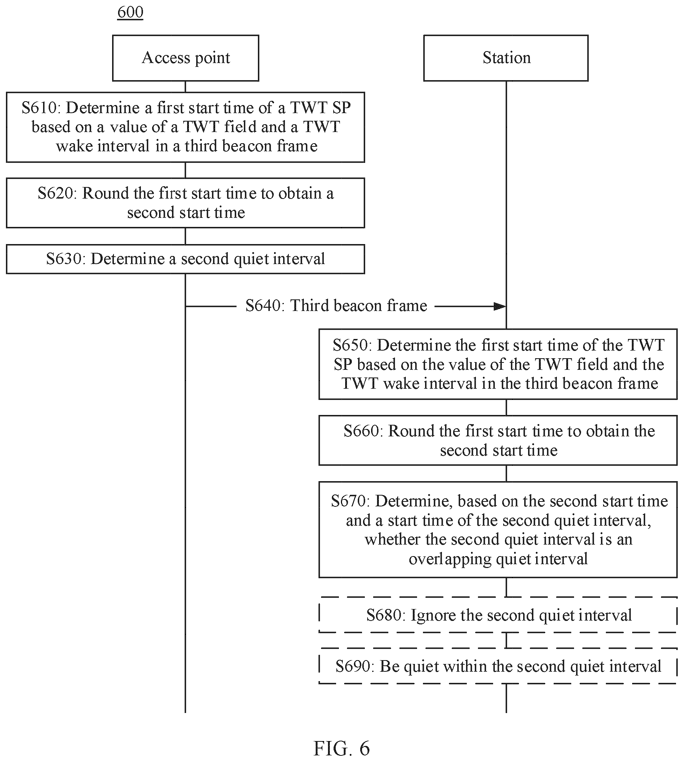

FIG. 6 is a schematic diagram of a communication method 600 according to an embodiment of this application. The method 600 may include the following steps.

S610: Determine a first start time of a target wake time service period TWT SP based on a value of a target wake time TWT field and a TWT wake interval in a third beacon frame.

Specifically, an access point (access point, AP) determines the first start time of the TWT SP based on the value of the TWT field and the TWT wake interval in the third beacon frame.

It should be noted that the process of S610 is similar to the process of S510. To avoid repetition, detailed descriptions thereof are omitted herein. S620: Round the first start time to obtain a second start time.

Specifically, after determining the first start time, the AP rounds the first start time to obtain the second start time.

The second start time is based on a TSF.

It should be noted that, for the foregoing process of rounding the first start time, refer to the description of the process of rounding the first start time in S520.

It should be noted that a difference between S620 and S520 lies in that, in S520, after obtaining the second start time, the AP sets the value of the TWT field in the second beacon frame to the second start time. However, in S620, the AP does not need to set the value of the TWT field in the third beacon frame to the second start time.

It should be noted that, if the third beacon frame is followed by a plurality of TWT SPs, start times of the plurality of TWT SPs may all be determined in a manner of S610 and S620. In other words, the start times of the plurality of TWT SPs determined in the manner of S610 and S620 are all integer multiples of TU.

S630: Determine a second quiet interval.

Specifically, the AP determines the second quiet interval for the TWT SP, and the second quiet interval is an overlapping quiet interval.

It should be noted that the AP may configure one overlapping quiet interval for each TWT SP included in a broadcast TWT ID, or may configure one overlapping quiet interval for each of one or more TWT SPs. A quantity of overlapping quiet intervals determined by the AP is not limited in this application. For ease of description, an example in which the AP determines an overlapping quiet interval for one TWT SP is used below for description. For a manner in which the AP determines an overlapping quiet interval for another TWT SP, refer to the following description.

Specifically, the AP sets a start time of the second quiet interval to be an integer multiple of TU, and the AP determines that the start time of the first quiet interval is the second start time, where duration of the first quiet interval is 1 TU.

The second start time is based on the TSF, and the start time of the second quiet interval is based on a TBTT. It should be understood that when the start time of the second quiet interval is the integer multiple of TU, or when both the second start time and the start time of the second quiet interval are integer multiples of TU, it may be considered that the TSF is aligned with the TBTT.

The third beacon frame includes the second quiet interval.

S640: Send the third beacon frame.

Specifically, the AP sends the third beacon frame to a station.

Correspondingly, the station receives the third beacon frame from the AP.

It should be noted that the process of S640 is similar to the process of S540. To avoid repetition, detailed descriptions thereof are omitted herein.

S650: The station determines the first start time of the TWT SP based on the value of the TWT field and the TWT wake interval in the third beacon frame.

Specifically, after receiving the third beacon frame, the station determines the first start time of the TWT SP based on the value of the TWT field and the TWT wake interval in the third beacon frame.

It should be noted that the process of S650 is similar to the process of S550. To avoid repetition, detailed descriptions thereof are omitted herein.

S660: The station rounds the first start time to obtain the second start time.

Specifically, after determining the first start time, the station rounds the first start time to obtain the second start time.

It should be noted that the process of S660 is similar to the process of S560. To avoid repetition, detailed descriptions thereof are omitted herein.

S670: The station determines, based on the second start time and the start time of the second quiet interval, whether the second quiet interval is the overlapping quiet interval.

In a possible implementation, when the second start time is the same as the start time of the second quiet interval, the station determines that the second quiet interval is the overlapping quiet interval.

In a possible implementation, when the second start time is different from the start time of the second quiet interval, the station determines that the second quiet interval is not the overlapping quiet interval.

In a possible implementation, the method 600 further includes S680: The station ignores the second quiet interval.

Specifically, when the station is an extremely high throughput station (for example, an EHT STA), the station ignores the second quiet interval, in other words, the station is not quiet within the second quiet interval when the station determines that the second quiet interval is the overlapping quiet interval.

In a possible implementation, the method 600 further includes S690: The station is quiet within the second quiet interval.

Specifically, when the station is an extremely high throughput station (for example, an EHT STA), the station is quiet within the second quiet interval when the station determines that the second quiet interval is not the overlapping quiet interval.

Based on the foregoing solution, when configuring an overlapping quiet interval, the AP can set, to a start time of the overlapping quiet interval, a start time of a TWT SP obtained by rounding a start time that is determined based on information about a TWT element and that is of the TWT SP included in the broadcast TWT ID, so that the start time of the TWT SP and the start time of the quiet interval are in the unit of the TU, and can match each other. This avoids misreading caused by nonalignment of the start time of the TWT SP and the start time of the quiet interval.

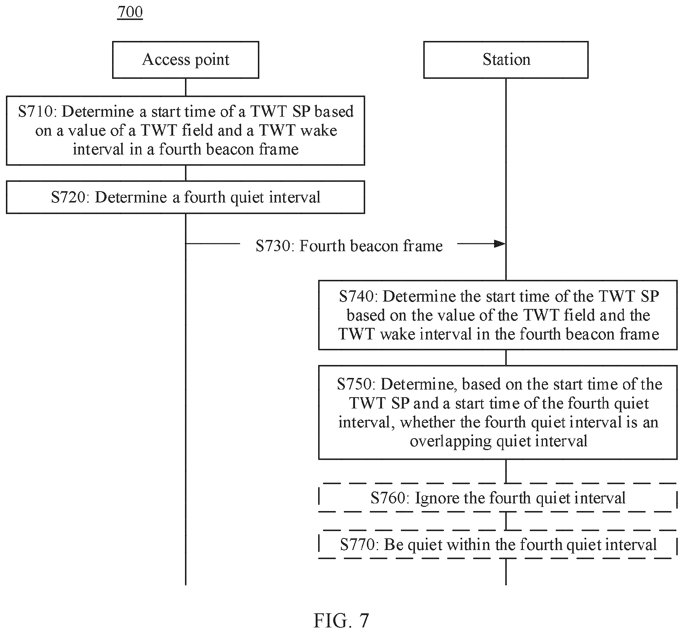

FIG. 7 is a schematic diagram of a communication method 700 according to an embodiment of this application. The method 700 may include the following steps.

S710: Determine a start time of a target wake time service period TWT SP based on a value of a target wake time TWT field and a TWT wake interval in a fourth beacon frame.

Specifically, an access point (access point, AP) determines the start time of the TWT SP based on the value of the TWT field and the TWT wake interval in the fourth beacon frame.

The start time of the TWT SP is based on a TSF.

It should be noted that the process of S710 is similar to the process of S510. To avoid repetition, detailed descriptions thereof are omitted herein.

S720: Determine a fourth quiet interval.

Specifically, the AP determines the fourth quiet interval for the TWT SP, and the fourth quiet interval is an overlapping quiet interval.

It should be noted that the AP may configure one overlapping quiet interval for each TWT SP included in a broadcast TWT ID, or may configure one overlapping quiet interval for each of one or more TWT SPs. A quantity of overlapping quiet intervals determined by the AP is not limited in this application. For ease of description, an example in which the AP determines an overlapping quiet interval for one TWT SP is used below for description. For a manner in which the AP determines an overlapping quiet interval for another TWT SP, refer to the following description.

Specifically, the AP determines the fourth quiet interval, the start time of the TWT SP falls within the fourth quiet interval, and duration of the first quiet interval is 1 TU. In other words, the AP determines a quiet interval whose duration is 1 TU and that includes the start time of the TWT SP as the fourth quiet interval.

A start time of the fourth quiet interval is based on a TBTT.

It should be noted that the start time of the fourth quiet interval may be an integer multiple of TU, or may not be an integer multiple of TU. This is not limited in this application.

The fourth beacon frame includes the fourth quiet interval.

S730: Send the fourth beacon frame.

Specifically, the AP sends the fourth beacon frame to a station.

Correspondingly, the station receives the fourth beacon frame from the AP.

It should be noted that the process of S730 is similar to the process of S540. To avoid repetition, detailed descriptions thereof are omitted herein.

S740: The station determines the start time of the TWT SP based on the value of the TWT field and the TWT wake interval in the fourth beacon frame.

Specifically, after receiving the fourth beacon frame, the station determines the start time of the TWT SP based on the value of the TWT field and the TWT wake interval in the fourth beacon frame.

It should be noted that the process of S740 is similar to the process of S550. To avoid repetition, detailed descriptions thereof are omitted herein.

S750: The station determines, based on the start time of the TWT SP and the start time of the fourth quiet interval, whether the fourth quiet interval is the overlapping quiet interval.

Specifically, the station determines the fourth quiet interval based on the start time of the fourth quiet interval and the duration of the fourth quiet interval, and further determines, depending on whether the start time of the TWT SP falls within the fourth quiet interval, whether the fourth quiet interval is the overlapping quiet interval.

In a possible implementation, when the start time of the TWT SP falls within the fourth quiet interval, the station determines that the fourth quiet interval is the overlapping quiet interval.

In a possible implementation, when the start time of the TWT SP does not fall within the fourth quiet interval, the station determines that the fourth quiet interval is not the overlapping quiet interval.

In a possible implementation, the method 700 further includes S760: The station ignores the fourth quiet interval.

Specifically, when the station is an extremely high throughput station (for example, an EHT STA), when the station determines that the fourth quiet interval is the overlapping quiet interval, the station ignores the fourth quiet interval, in other words, the station is not quiet within the fourth quiet interval.

In a possible implementation, the method 700 further includes S770: The station is quiet within the second quiet interval.

Specifically, when the station is an extremely high throughput station (for example, an EHT STA), the station is quiet within the fourth quiet interval when the station determines that the fourth quiet interval is not the overlapping quiet interval.

Based on the foregoing solution, when the start time of the TWT SP cannot be aligned with the start time of the first quiet interval, when setting an overlapping quiet interval, the access point determines that a quiet interval overlapping the start time of the TWT SP as the overlapping quiet interval. The station can determine whether a quiet interval is an overlapping quiet interval by determining whether the start time of the TWT SP falls within the quiet interval.

It may be understood that the examples in FIG. 5 to FIG. 7 in embodiments of this application are merely intended to help a person skilled in the art understand embodiments of this application, and are not intended to limit embodiments of this application to the specific scenarios shown in the examples. A person skilled in the art can apparently make various equivalent modifications or changes based on the examples in FIG. 5 to FIG. 7, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on implementation processes of embodiments of this application.

It may be further understood that some frame names, such as the first beacon frame or the second beacon frame, are involved in embodiments of this application. It should be understood that the names of the frames do not limit the protection scope of embodiments of this application.

It may be further understood that, in the foregoing method embodiments, the methods and operations implemented by the access point may alternatively be implemented by a component (for example, a chip or a circuit) that may be composed of the access point. In addition, the methods and operations implemented by the station may alternatively be implemented by a component (for example, a chip or a circuit) that may be composed of the station. This is not limited. Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

It should be understood that the access point and the station may perform some or all of the steps in the foregoing embodiments. These steps or operations are merely examples. In embodiments of this application, other operations or variations of various operations may be further performed. In addition, the steps may be performed in another order different from that presented in the foregoing embodiments, and not all the operations in the foregoing embodiments may be performed.

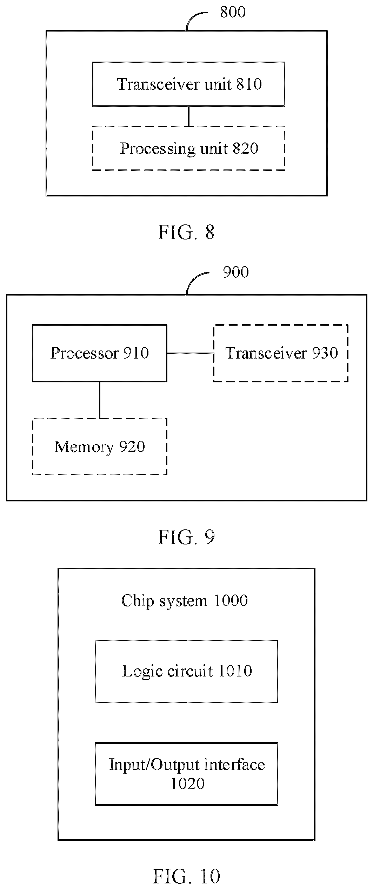

The foregoing describes in detail the communication methods provided in embodiments of this application with reference to FIG. 5 to FIG. 7. The following describes in detail communication apparatuses provided in embodiments of this application with reference to FIG. 8 to FIG. 10. It should be understood that descriptions of apparatus embodiments correspond to the descriptions of the method embodiments. Therefore, for content that is not described in detail, refer to the foregoing method embodiments. For brevity, some content is not described again.

FIG. 8 is a schematic block diagram of a communication apparatus according to an embodiment of this application. An apparatus 800 includes a transceiver unit 810, and the transceiver unit 810 may be configured to implement a corresponding communication function. The transceiver unit 810 may also be referred to as a communication interface or a communication unit.

In a possible implementation, the apparatus 800 may further include a processing unit 820, and the processing unit 820 may be configured to perform data processing.

In a possible implementation, the apparatus 800 further includes a storage unit. The storage unit may be configured to store instructions and/or data. The processing unit 820 may read the instructions and/or the data in the storage unit, so that the apparatus implements actions of different terminal devices in the foregoing method embodiments, for example, the actions of the access point or the station.

The apparatus 800 may be configured to perform the actions performed by the access point or the station in the foregoing method embodiments. In this case, the apparatus 800 may be the access point or the station, or a component of the access point or the station. The transceiver unit 810 is configured to perform operations related to sending and receiving of the access point or the station in the foregoing method embodiments, and the processing unit 820 is configured to perform processing-related operations of the access point or the station in the foregoing method embodiments.

It should be further understood that the apparatus 800 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the access point or the station in the foregoing embodiments, and may be configured to perform the procedures and/or steps corresponding to the access point or the station in the foregoing method embodiments. To avoid repetition, details are not described herein again.

The apparatus 800 in the foregoing solutions has functions of implementing the corresponding steps performed by the access point or the station in the foregoing methods. The function may be implemented by hardware, or may be implemented by hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 810 may alternatively be a transceiver circuit (which may include, for example, a receiving circuit and a transmitter circuit), and the processing unit may be a processing circuit.

It should be noted that the apparatus in FIG. 8 may be the access point or the station in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 9, an embodiment of this application provides another communication apparatus 900. The apparatus 900 includes a processor 910, and the processor 910 is coupled to a memory 920. The memory 920 is configured to store a computer program or instructions and/or data. The processor 910 is configured to execute the computer program or instructions stored in the memory 920, or read the data stored in the memory 920, to perform the methods in the foregoing method embodiments.

In a possible implementation, there are one or more processors 910.

In a possible implementation, there are one or more memories 920.

In a possible implementation, the memory 920 and the processor 910 are integrated together, or are disposed separately.

In a possible implementation, as shown in FIG. 9, the apparatus 900 further includes a transceiver 930, and the transceiver 930 is configured to receive and/or send a signal. For example, the processor 910 is configured to control the transceiver 930 to receive and/or send the signal.

In a solution, the apparatus 900 is configured to implement operations performed by the access point or the station in the foregoing method embodiments.

For example, the processor 910 is configured to execute the computer program or instructions stored in the memory 920, to implement related operations of the access point in the foregoing method embodiments, for example, the access point in any one of the embodiments shown in FIG. 5 to FIG. 7, or the method performed by the access point in any one of the embodiments shown in FIG. 5 to FIG. 7.

It should be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) may be integrated into the processor.

It should further be noted that the memory described in this specification aims to include but is not limited to these memories and any memory of another appropriate type.

As shown in FIG. 10, an embodiment of this application provides a chip system 1000. The chip system 1000 (or may also be referred to as a processing system) includes a logic circuit 1010 and an input/output interface (input/output interface) 1020.

The logic circuit 1010 may be a processing circuit in the chip system 1000. The logic circuit 1010 may be coupled and connected to a storage unit, and invoke instructions in the storage unit, so that the chip system 1000 can implement the methods and the functions in embodiments of this application. The input/output interface 1020 may be an input/output circuit in the chip system 1000, and outputs information processed by the chip system 1000, or inputs to-be-processed data or signaling information into the chip system 1000 for processing.

In a solution, the chip system 1000 is configured to implement operations performed by the access point or the station in the foregoing method embodiments.

For example, the logic circuit 1010 is configured to implement processing-related operations performed by the access point in the foregoing method embodiments, for example, the processing-related operations performed by the access point in any one of the embodiments shown in FIG. 5 to FIG. 7, and the input/output interface 1020 is configured to implement sending and/or receiving-related operations performed by the access point in the foregoing method embodiments, for example, the sending and/or receiving-related operations performed by the access point in any one of the embodiments shown in FIG. 5 to FIG. 7.

An embodiment of this application further provides a computer-readable storage medium. The computer-readable storage medium stores computer instructions for implementing the methods performed by the access point or the station in the foregoing method embodiments.

For example, when a computer program is executed by a computer, the computer is enabled to implement the methods performed by the access point or the station in the foregoing method embodiments.

An embodiment of this application further provides a computer program product, including instructions. When the instructions are executed by a computer, the methods performed by the access point or the station in the foregoing method embodiments are implemented.

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining a first start time of a target wake time service period TWT SP based on a value of a target wake time TWT field and a TWT wake interval in a first beacon frame; and
rounding the first start time to obtain a second start time.

2. The method according to claim 1, wherein the rounding is rounding in a unit of a time unit TU.

3. The method according to claim 1 or 2, wherein the rounding the first start time to obtain a second start time comprises:
rounding up the first start time to obtain the second start time; or
rounding down the first start time to obtain the second start time; or
rounding off the first start time to obtain the second start time.

4. The method according to any one of claims 1 to 3, wherein the second start time is a value of a target wake time TWT field in a second beacon frame, and the second beacon frame is a beacon frame following the first beacon frame.

5. The method according to claim 4, wherein the method further comprises:
sending the first beacon frame and/or the second beacon frame.

6. The method according to claim 4 or 5, wherein a value of a broadcast target wake time identifier TWT ID field in the first beacon frame is the same as a value of a broadcast TWT ID field in the second beacon frame.

7. The method according to any one of claims 4 to 6, wherein the first beacon frame and the second beacon frame are delivery traffic indication map DTIM beacon frames; or
the first beacon frame is a DTIM beacon frame, and the second beacon frame is a regular beacon frame.

8. The method according to any one of claims 1 to 7, wherein the method further comprises:
determining a first quiet interval, wherein a start time of the first quiet interval is the second start time, and the first quiet interval is an overlapping quiet interval.

9. The method according to claim 8, wherein the second beacon frame or the first beacon frame comprises the first quiet interval, and the second beacon frame is the beacon frame following the first beacon frame.

10. The method according to claim 8 or 9, wherein the start time of the first quiet interval is based on a target beacon transmission time TBTT, the TBTT is N multiplied by time unit TU, and N is an integer.

11. The method according to claim 1 or 2, wherein a start time of a second quiet interval is the second start time, and the second quiet interval is an overlapping quiet interval.

12. The method according to claim 11, wherein a second beacon frame or the first beacon frame comprises the second quiet interval, and the second beacon frame is a beacon frame following the first beacon frame.

13. The method according to claim 11 or 12, wherein the start time of the second quiet interval is based on a target beacon transmission time TBTT, the TBTT is N multiplied by time unit TU, and N is an integer.

14. The method according to claim 1 or 2, wherein the method further comprises:
determining a third quiet interval, wherein the second start time falls within the third quiet interval, and the third quiet interval is an overlapping quiet interval.

15. The method according to any one of claims 1 to 14, wherein the method further comprises:
determining the TWT wake interval based on a TWT wake interval mantissa field and a TWT wake interval exponent field in the first beacon frame.

16. A communication method, comprising:
determining a start time of a target wake time service period TWT SP based on a value of a target wake time TWT field and a TWT wake interval in a beacon frame; and
determining a quiet interval, wherein the start time of the TWT SP falls within the quiet interval, and the quiet interval is an overlapping quiet interval.

17. The method according to claim 16, wherein the beacon frame comprises an element corresponding to the quiet interval.

18. A communication method, comprising:
determining, by a station, a first start time of a target wake time service period TWT SP based on a value of a target wake time TWT field and a TWT wake interval in a beacon frame;
rounding, by the station, the first start time to obtain a second start time; and
determining, by the station based on the second start time and a start time of a quiet interval, whether the quiet interval is an overlapping quiet interval.

19. The method according to claim 18, wherein the rounding is rounding in a unit of a time unit TU.

20. The method according to claim 18 or 19, wherein the rounding, by the station, the first start time to obtain a second start time comprises:
rounding up, by the station, the first start time to obtain the second start time;
rounding down, by the station, the first start time to obtain the second start time; or
rounding off, by the station, the first start time to obtain the second start time.

21. The method according to any one of claims 18 to 20, wherein the determining, by the station based on the second start time and a start time of a quiet interval, whether the quiet interval is an overlapping quiet interval comprises:
when the second start time is the same as the start time of the quiet interval, determining, by the station, that the quiet interval is the overlapping quiet interval.

22. The method according to claim 21, wherein the start time of the quiet interval is based on a target beacon transmission time TBTT, the TBTT is N multiplied by time unit TU, and N is an integer.

23. The method according to any one of claims 18 to 22, wherein the method further comprises:
receiving, by the station, the beacon frame.

24. The method according to any one of claims 18 to 22, wherein the beacon frame is a delivery traffic indication map DTIM beacon frame or a regular beacon frame.

25. The method according to claim 18 or 19, wherein the determining, by the station based on the second start time and a start time of a quiet interval, whether the quiet interval is an overlapping quiet interval comprises:
determining, by the station, the quiet interval based on the start time of the quiet interval and duration of the quiet interval; and
when the second start time falls within the quiet interval, determining, by the station, that the quiet interval is the overlapping quiet interval.

26. The method according to any one of claims 18 to 25, wherein the beacon frame comprises an element corresponding to the quiet interval.

27. The method according to any one of claims 21 to 26, wherein when the station is an extremely high throughput station, the method further comprises:
ignoring, by the station, the quiet interval.

28. A communication method, comprising:
determining, by a station, a start time of a target wake time service period TWT SP based on a value of a target wake time TWT field and a TWT wake interval in a beacon frame; and
determining, by the station based on the start time of the TWT SP and a start time of a quiet interval, whether the quiet interval is an overlapping quiet interval.

29. The method according to claim 28, wherein the beacon frame comprises an element corresponding to the quiet interval.

30. The method according to claim 28 or 29, wherein the determining, by the station based on the start time of the TWT SP and a start time of a quiet interval, whether the quiet interval is an overlapping quiet interval comprises:
determining, by the station, the quiet interval based on the start time of the quiet interval and duration of the quiet interval; and
when the start time of the TWT SP falls within the quiet interval, determining, by the station, that the quiet interval is the overlapping quiet interval.

31. The method according to claim 30, wherein when the station is an extremely high throughput station, the method further comprises:
ignoring, by the station, the quiet interval.

32. A communication apparatus, comprising:
a processor, configured to execute a computer program stored in a memory, to enable the communication apparatus to perform the method according to any one of claims 1 to 31.

33. A computer-readable storage medium, wherein the computer-readable storage medium stores a computer program or instructions; and when the computer program or the instructions are executed by a processor, the method according to any one of claims 1 to 31 is performed.

34. A computer program product comprising instructions, wherein when the computer program product runs on a computer, the method according to any one of claims 1 to 31 is performed.

35. A chip system, comprising: a processor, configured to invoke a computer program or instructions from a memory and run the computer program or instructions, so that a communication apparatus installed with the chip system implements the method according to any one of claims 1 to 31.
